# EUROPÄISCHE PATENTSCHRIFT

(11) **EP 1 918 207 B1**
(45) Veröffentlichungstag und Bekanntmachung des Hinweises auf die Patenterteilung: **24.06.2009**
(21) Anmeldenummer: 06022782.4
(22) Anmeldetag: 02.11.2006
(51) Int. Cl.: B65B 51/16, B65B 51/26, B29C 65/18

(54) **Siegelvorrichtung für Streifenverpackungen**
Sealing device for strip-like packages
Dispositif de soudage pour des emballages sous forme de bande

(43) Veröffentlichungstag der Anmeldung: 07.05.2008
(73) Patentinhaber: Konstandin Engineering GmbH, 76307 Karlsbad (DE)
(72) Erfinder: Konstandin, Horst, 76307 Karlsbad (DE)
(74) Vertreter: Lemcke, Brommer & Partner

(56) Entgegenhaltungen:
- DE-A1-4102004 008 98
- DE-A1-0102004 062 52
- US-A1- 3 068 933

## Beschreibung

Die Erfindung betrifft eine Siegelvorrichtung für Streifenverpackungen, die mehrere, separat eingesiegelte Produktbeutel oder -fächer aufweisen, nach dem Oberbegriff des Anspruchs 1.

Eine Siegelvorrichtung der vorliegenden Art umfasst demnach zwei Siegelwalzen zum Zusammenführen und Verbinden zweier die Produktbeutel bildenden Siegelfolien. In die Oberfläche der Siegelwalzen ist jeweils eine Anzahl von Vertiefungen eingelassen, die in ihrer Lage und Tiefe den Produktbeuteln der Streifenverpackung entsprechen und der Produktform bzw. dem Füllvolumen angepasst sind. Ferner umfasst eine Siegelwalze der vorliegenden Art mindestens einen Antrieb für die Siegelwalzen und je ein Walzenlager für jede Siegelwalze. Außerdem ist mindestens eine Siegelwalze zur anderen Siegelwalze hin elastisch vorgespannt.

Siegelvorrichtungen dieser Art werden insbesondere zum Verpacken von pharmazeutischen Produkten verwendet: Jedoch auch andere Produkte, die stückig vorliegen oder aber als Pulver bzw. Granulat, werden in Streifenverpackungen portionsweise eingesiegelt; besonders wenn es sich um Kleinteile handelt, die vor Umwelteinflüssen geschützt werden müssen. In einer Siegelvorrichtung der eingangs genannten Art werden zwei Siegelfolien zwischen den beiden Siegelwalzen zusammengeführt und die Produkte unmittelbar vor Durchlaufen des Spaltes zwischen den beiden Siegelwalzen an denjenigen Stellen zwischen die Siegelfolien eingelegt bzw. eingefüllt, die später die Beutel bilden. Zwischen den einzelnen Beuteln werden die beiden Siegelfolien im Spalt der Siegelwalzen untereinander verbunden. Dementsprechend definieren die Vertiefungen in den Oberflächen der Siegelwalzen die späteren Beutel, während die Stege zwischen den einzelnen Vertiefungen die beiden Siegelfolien aufeinander pressen und die Produkte in den Beuteln dementsprechend rundum einsiegeln.

Die die Produktbeutel der Streifenverpackung definierenden Vertiefungen in den Siegelwalzen bewirken, dass der Walzdruck, der zur Verbindung der beiden Siegelfolien untereinander notwendig ist, im Bereich der zwischengelegten Produkte nicht wirkt, wodurch die Produktbeutel gebildet werden. Demnach laufen bei einem Walzspalt "Null" lediglich die Stege zwischen den Vertiefungen in den Oberflächen der Siegelwalzen aufeinander, wobei die beidseitigen Vertiefungen in den Siegelwalzen-Oberflächen Kammern bilden, in denen kein Walzdruck aufgebaut wird.

Gleichwohl ist eine elastische Vorspannung der Siegelwalzen gegeneinander unerlässlich, da die in den Produktbeuteln der Streifenverpackung befindlichen Produkte mitunter nicht richtig orientiert liegen oder ein Fremdkörper zwischen die Siegelwalzen geraten könnte. Um im ersteren Fall die Beschädigung des Produkts zu vermeiden und im letzteren Fall eine Beschädigung der Siegelwalzen zu verhindern, geben diese aufgrund der elastischen Vorspannung nach und öffnen den Walzspalt an der entsprechenden Stelle.

Die Produktbeutel in herkömmlichen Streifenverpackungen sind im Allgemeinen in regelmäßigen Reihen und Spalten angeordnet, so dass sich zwischen den Produktbeuteln Längsstege und Querstege ausbilden. Die beiden Siegelwalzenoberflächen rollen im Walzspalt in einer quer zur Bewegungsrichtung verlaufenden Linie auf den beiden Siegelfolien ab, so dass die quer zur Bewegungsrichtung verlaufenden Querstege eine sehr viel höhere Anpress-Fläche entlang dieser Linie bieten als die Längsstege, wenn diese Linie über einer Produktbeutel-Reihe liegt. Dementsprechend wird die Kraft der elastischen Vorspannung der Siegelwalzen gegeneinander immer dann, wenn ein Quersteg durch den Walzspalt geht, auf eine größere Fläche verteilt, so dass der Siegeldruck proportional sinkt. Umgekehrt steigt der Siegeldruck sprunghaft an, sobald der Quersteg durch den Walzspalt hindurchgegangen ist und die Kraft der elastischen Vorspannung nur noch auf die Längsstege wirkt.

Es ergibt sich hieraus ein Zielkonflikt. Denn um eine sichere Verbindung der Siegelfolien untereinander an den Querstegen zu gewährleisten, muss die Kraft für die elastische Vorspannung der Siegelwalzen gegeneinander vergleichsweise hoch sein. An den Längsstegen der Streifenverpackung ergibt sich dann mitunter jedoch ein zu hoher Druck, der die Dichtheit der Versiegelung gefährdet und mitunter eine Beschädigung der Siegelfolien befürchten lässt.

Bei einer aus der DE-A-10 2004 062 520 bekannten Siegelvorrichtung ist daher mindestens ein Walzenlager im Wesentlichen in einer Ebene senkrecht zur Walzenachse verschiebbar oder schwenkbar gehalten und in Richtung zum anderen Walzenlager hin elastisch vorgespannt. Durch diese Maßnahme werden die Siegelwalzen nicht aus ihrer Parallelität heraus verschwenkt, wenn sie nachgeben, sondern achsenparallel voneinander weg und zueinander hin bewegt. Außerdem ist eine Verstelleinrichtung zum Einstellen eines Mindestabstands der Walzenlager zueinander vorgesehen, welcher Mindestabstand einen Anschlag für die elastische Vorspannung bildet. Die beiden Walzenlager und somit auch die beiden Siegelwalzen werden durch die elastische Vorspannung also nur bis zu einem Anschlag zusammenbewegt, der eine Mindestbreite des Walzspalts sicherstellt. Der Walzspalt schließt sich nicht weiter als bis zum voreingestellten Mindestabstand, so dass die beiden aufeinandergepressten Siegelfolien in jedem Fall beschädigungsfrei bleiben, auch wenn die elastische Vorspannungskraft relativ hoch eingestellt wird. Zweckmäßigerweise wird als Mindestabstand ein Abstand gewählt, der etwas kleiner ist, als die aufsummierte Dicke der durch den Walzspalt geführten Siegelfolien.

Ähnliche Maßnahmen zur Lösung des genannten Zielkonflikts sind aus der US-A-3 068 933 und der DE-A-10 2004 008 984 bekannt.

Der vorliegenden Erfindung liegt die Aufgabe zugrunde, eine Siegelvorrichtung der eingangs genannten Art zu verbessern, so dass eine sichere Verbindung der beiden Siegelfolien bei größtmöglichem Schutz für die eingelegten Produkte gewährleistet ist.

Gelöst ist diese Aufgabe durch eine Siegelvorrichtung mit den Merkmalen des Anspruchs 1.

Bevorzugte Ausgestaltungen und Weiterbildungen der erfindungsgemäßen Siegelvorrichtung sind in den Ansprüchen 2 bis 5 niedergelegt.

Im Rahmen der Erfindung enthält die Verstelleinrichtung also eine Spindel oder eine Gewindestange, die in zwei separate Teile mit unterschiedlich orientierter Gewindesteigung unterteilt ist. Jeder dieser beiden Teile ist einer Siegelwalze zugeordnet. Die Siegelwalzen sind am jeweiligen Gewinde der Spindel bzw. der Gewindestange verstellbar befestigt, beispielsweise mittels einer Gewindemutter, die formschlüssig mit dem Walzenlager verbunden ist. Die beiden Teile der Spindel oder der Gewindestange, die axial fluchtend voneinander weg und bis zum Aneinanderstoßen zueinander hin axial bewegt werden können, sind mit einem Drehmoment übertragenden, axiale Bewegungen zulassenden Verbindungselement untereinander verbunden. Dieses Verbindungselement kann eine Profilhülse oder eine Keilwelle sein.

Das Vorsehen einer solchen Spindel oder Gewindestange mit unterschiedlich orientierten Gewindesteigungen hat den großen Vorteil, dass die Verstelleinrichtung mittels eines Stellmotors einstellbar ist, der an der Gewindestange bzw. Spindel angreift und eine zentrale Verstellung des Mindestabstands auch während des Betriebs der Siegelvorrichtung bewirken kann. Wenn darüber hinaus dieser Stellmotor einem Stellwertspeicher zugeordnet ist, können einzelne, in Versuchsreihen empirisch ermittelte optimale Werte für den Mindestabstand der Siegelwalzen reproduzierbar wieder abgerufen werden, beispielsweise nach einem Ersetzen von Siegelwalzen oder Ändern der Packungsformate und dergleichen.

Die elastische Vorspannung der Siegelwalzen gegeneinander wird vorteilhafterweise mit einem pneumatischen Federelement, beispielsweise einem Pneumatikzylinder erzeugt. Dieser Pneumatikzylinder kann bei Verwendung einer zweigeteilten Spindel oder Gewindestange als Verstellelement auf einen von deren Teilen einwirken, während der andere Teil der Spindel oder Gewindestange starr gelagert ist und zweckmäßigerweise mit dem - soweit vorhanden - motorischen Antrieb versehen ist.

Abschließend sei bemerkt, dass die erfindungsgemäße Siegelvorrichtung nicht nur zum Zusammenführen und Versiegeln zweier Siegelfolien unter Bildung von Produktbeuteln verwendet werden kann, sondern ebenso zum Zusammenführen einer Blisterfolie mit einer diese abdeckenden Siegelfolie. Denn auch in diesem Fall bietet es große Vorteile, wenn der von den Siegelwalzen ausgeübte Walzdruck lediglich auf die zwischen den einzelnen Produktvertiefungen der Blisterfolie gebildeten Stegen wirkt, um die Siegelfolie sicher auf die Blisterfolie aufzusiegeln.

Ein Ausführungsbeispiel einer erfindungsgemäßen Siegelvorrichtung wird anhand der beigefügten Zeichnungen näher beschrieben und erläutert. Es zeigen:
Figur 1 eine perspektivische Ansicht einer Siegelvorrichtung;
Figur 2 eine geschnittene Draufsicht auf die Siegelvorrichtung nach Figur 1;
Figur 3 eine geschnittene rückseitige Ansicht der Siegelvorrichtung nach Figur 1.

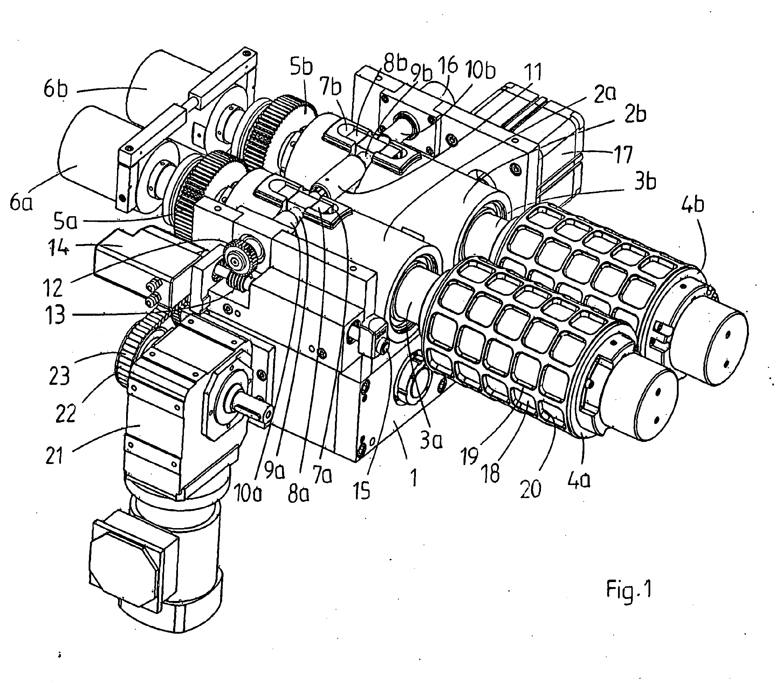

Die in Figur 1 perspektivisch dargestellte Siegelvorrichtung besteht aus einem Gestell 1, in dem auf zwei (hier nicht sichtbaren) Schwingen zwei Walzenlager 2a und 2b derart verschwenkbar gehalten sind, dass sie sich bei einem Verschwenken achsparallel voneinander weg oder aufeinander zu bewegen. In den Walzenlagern 2a, 2b sind zwei Wellen 3a, 3b gelagert, auf denen wiederum zwei Siegelwalzen 4a, 4b aufgesteckt und befestigt sind. Rückseitig sind die Wellen 3a, 3b mit Zahnrädern 5a, 5b sowie Schleifringkörpern 6a, 6b versehen. Über in Kulissen 7a, 7b formschlüssig festgelegte Gewindemuttern 8a, 8b sind die beiden Walzenlager 2a, 2b am jeweiligen Gewinde 9a, 9b einer zweigeteilten Spindel 10 verstellbar festgelegt, wobei die beiden Teile der Spindel 10 axial gegeneinander verschieblich mit einer drehmomentübertragenden Profilhülse 11 verbunden sind. Der erste Teil der Spindel 10 mit dem Gewinde 9a ist ortsfest am Gestell 1 gelagert und verschiebt über die Gewindemutter 8a das Walzenlager 2a, sobald die Spindel 10 gedreht wird. Gleichzeitig verschiebt der zweite Teil der Spindel 10 mit dem umgekehrt orientierten Gewinde 9b über die Gewindemutter 8b das Walzenlager 2b in entgegengesetzter Richtung, so dass mit einer Drehung der Spindel 10, die sich wegen der Profilhülse 11 auf beide Gewinde 9a und 9b auswirkt, ein Mindestabstand der beiden Siegelwalzen 4a, 4b einstellbar ist. Diese Drehung der Spindel 10 wird über ein am Gestell 1 gelagertes Stirnrad 12 oder Schneckenrad und ein mit diesem kämmendes Stirnrad oder eine Schneckenwelle 13 von einem Stellmotor mit zugeordnetem Stellwertspeicher 14 motorisch und gegebenenfalls automatisch durchgeführt. Alternativ ist eine manuelle Einstellung über eine Stellspindel 15 möglich

Das Walzenlager 2b ist durch die Zweiteilung der Spindel 10 in den durch ein axial gleitendes Lager 16 gegebenen Grenzen frei gegen das andere Walzenlager 2a verschiebbar bzw. achsparallel verschwenkbar, da die Spindel 10 innerhalb der Profilhülse 11 geteilt ist. Ein Pneumatikzylinder 17 spannt das Walzenlager 2b gegen das Walzenlager 2a vor, wobei die Spindel 10 durch das Aufeinandertreffen der beiden Spindelhälften innerhalb der Profilhülse 11 einen Anschlag für diese Vorspannung bildet und somit einen Mindestspalt zwischen den Siegelwalzen 4a und 4b gewährleistet.

Die Siegelwalzen 4a und 4b weisen eine Oberfläche mit periodischen Vertiefungen 18 auf, die bei stückiger Füllung der Produktform und bei Pulver bzw. Granulat dem Füllvolumen angepasst sind, wobei zwischen den Vertiefungen 18 Querstege 19 und Längsstege 20 verbleiben, mit denen der Druck auf die Siegelfolien ausgeübt wird. Ein außerdem am Gestell 1 angeflanschter Antriebsmotor 21 mit Zahnriemenscheibe 22 und Zahnriemen 23 sorgt für den Antrieb der Siegelwalzen 4a und 4b, was in den nachfolgenden Figuren deutlicher dargestellt ist.

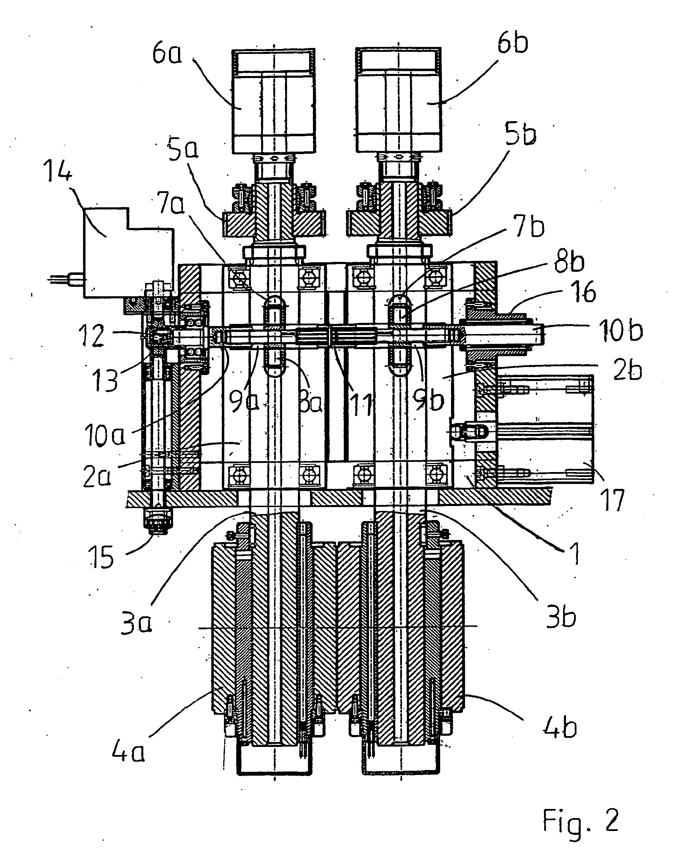

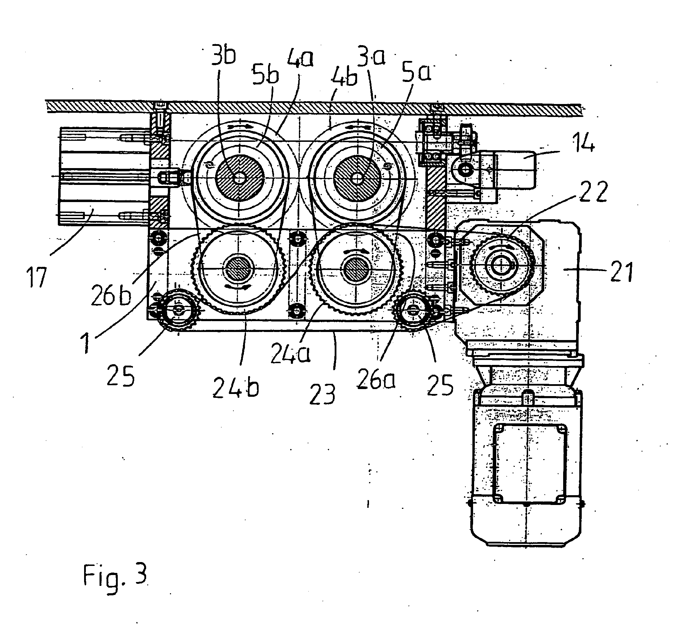

In den Figuren 2 und 3 sind gleiche Elemente mit denselben Bezugszeichen versehen wie in Figur 1, so dass insofern auf die Beschreibung zu Figur 1 Bezug genommen wird.

In der Schnittdarstellung von oben nach Figur 2 wird die Zweiteilung der Spindel 10 in einen linken, feststehenden Teil 10a und einen rechten, beweglichen Teil 10b, die beide über eine Profilhülse 11 axial gegeneinander verschieblich drehmomentübertragend verbunden sind, verdeutlicht. Über das Gewinde 9a und die auf diesem laufende Gewindemutter 8a, die formschlüssig in der Kulisse 7a des Walzenlagers 2a sitzt, wird das Walzenlager 2a und damit die Siegelwalze 4a in einer senkrecht zu ihrer Achsenrichtung verlaufenden Ebene verstellt, während bei jeder Drehung der Spindel 10 wegen des anders herum orientierten Gewindes 9b das Walzenlager 2b mit seiner Siegelwalze 4b über die in der Kulisse 7b sitzende Gewindemutter 8b entgegengesetzt bewegt wird, so dass sich insgesamt der zwischen den Siegelwalzen 4a und 4b verbleibende Spalt bei Anlage der beiden Spindelhälften 10a und 10b aneinander vergrößert oder verkleinert. Wenn die beiden Spindelhälften 10a und 10b aneinanderliegen, ergibt sich ein Mindestabstand der beiden Siegelwalzen 4a und 4b, da die rechte Spindelhälfte 10b im Lager 16 frei verschieblich gelagert ist und auch die Profilhülse 11 ein axiales Auseinanderziehen der beiden Spindelhälften 10a und 10b ermöglicht. Elastisch gegen ein Aufeinandertreffen der beiden Spindelhälften 10a und 10b vorgespannt wird das Walzenlager 2b und damit die Siegelwalze 4b von dem Pneumatikzylinder 17, der auf das Walzenlager 2b einwirkt und dieses gegen das Walzenlager 2a drückt. Gegen diese vorspannende Kraft des Pneumatikzylinders 17 kann die Siegelwalze 4b nachgeben, wenn etwa der Spalt zwischen den Siegelwalzen 4a und 4b aufgeweitet werden muss. Dies erfolgt dann jedoch so, dass die beiden Wellen 3a und 3b achsparallel bleiben und dementsprechend parallel verschwenkt werden.

Figur 3 schließlich zeigt eine teilgeschnittene Darstellung einer Rückansicht der Siegelvorrichtung aus Figur 1, um das Antriebskonzept der beiden Siegelwalzen 4a und 4b zu verdeutlichen. Der Antriebsmotor 21 treibt über die Zahnriemenscheibe 22 den Zahnriemen 23 an. Dieser umschlingt zwei Zahnriemenscheiben 24a und 24b in entgegengesetzter Orientierung sowie zwei Umlenkrollen 25. Die Zahnriemenscheiben 24a und 24b sind ortsfest gelagert, so dass die Spannung des Zahnriemens 23 konstant bleibt. Hinter den beiden Zahnriemenscheiben 24a und 24b ist jeweils ein Zahnrad angeordnet, das in dieser Darstellung nicht sichtbar ist. Diese beiden Zahnräder kämmen mit den Zahnrädern 5a und 5b, die auf den Wellen 3a und 3b der Siegelwalzen sitzen. Dementsprechend wird das Drehmoment des Antriebsmotors 21 von der Zahnriemenscheibe 22 über den Zahnriemen 23 auf die Zahnriemenscheiben 24a und 24b und von dort mittels Zahnrädern auf die Zahnräder 5a und 5b übertragen. Die Wellen 3a und 3b sitzen mit ihren (hier nicht sichtbaren) Walzenlagern 2a und 2b auf Schwingen 26a und 26b, welche um die ortsfest gelagerten Zahnriemenscheiben 24a und 24b bzw. deren Achsen verschwenkbar sind, um die erfindungsgemäße Variabilität des Abstands zwischen den beiden Wellen 3a und 3b zu gewährleisten. Durch das Verschwenken der beiden Schwingen 26a und 26b werden die Wellen 3a und 3b in ihrem Abstand zueinander achsparallel voneinander weg bewegt oder zueinander hin bewegt. Wenn die Wellen 3a und 3b durch ein Auseinanderdrücken des Walzspalts außerplanmäßig auseinandergedrückt werden, ergibt sich eine Schwenkbewegung der Schwinge 26b, wodurch zum Einen eine achsparallele Abstandsveränderung zwischen den Wellen 3a und 3b resultiert und zum Anderen sich weder der Eingriff der Zahnräder 5a und 5b mit ihren Gegenzahnrädern an den Zahnriemenscheiben 24a und 24b verändert, noch der Abstand zwischen den Zahnriemenscheiben 24a und 24b. Ein Reißen des Zahnriemens 23 oder ein Springen desselben auf den Zähnen der Zahnriemenscheiben ist dann sicher ausgeschlossen; der Antrieb wird in keiner Weise beeinträchtigt. Auch wenn die Siegelwalzen 4a und 4b gegen solche mit größerem oder kleinerem Durchmesser ausgetauscht werden, wodurch sich der Abstand zwischen den Wellen 3a und 3b zwangsläufig ändert, ist es durch das erfindungsgemäße indirekte Antriebskonzept nicht notwendig, am Antrieb irgendetwas zu ändern. Denn es verändert sich dann lediglich die Winkelstellung der Schwingen 26a und 26b, während der Abstand der Zahnriemenscheiben 24a und 24b konstant bleibt.

## Patentansprüche

1. Siegelvorrichtung für Streifenverpackungen mit mehreren, separat eingesiegelten Produktbeuteln oder -fächern, umfassend:
- zwei Siegelwalzen (4a, 4b) zum Zusammenführen und Verbinden zweier die Produktbeutel bildenden Siegelfolien, wobei in die Oberfläche der Siegelwalzen (4a, 4b), den Produktbeuteln der Streifenverpackung entsprechend, jeweils eine Anzahl von Vertiefungen (18) eingelassen ist,
- mindestens einen Antrieb (21, 22, 23, 24, 26) für die Siegelwalzen (4a, 4b) und
- je ein Walzenlager (2a, 2b) für jede Siegelwalze (4a, 4b),
- wobei mindestens eine Siegelwalze (4b) zur anderen Siegelwalze (4a) hin elastisch vorgespannt ist,
- wobei mindestens ein Walzenlager (2b) im Wesentlichen in einer Ebene senkrecht zur Walzenachse verschiebbar oder schwenkbar gehalten und in Richtung zum anderen Walzenlager (2a) hin elastisch vorgespannt ist,
- und wobei eine Verstelleinrichtung (7, 8, 9, 10, 11, 12, 13, 14) zum Einstellen eines einen Anschlag für die elastische Vorspannung bildenden Mindestabstands der Walzenlager (2a, 2b) zueinander vorgesehen ist,
**dadurch gekennzeichnet,**
**dass** die Verstelleinrichtung eine Spindel (10) oder Gewindestange enthält, welche in zwei separate Teile (10a, 10b) mit unterschiedlich orientierter Gewindesteigung (9a, 9b) unterteilt ist, wobei jeder Teil (10a, 10b) einer Siegelwalze (4a, 4b) zugeordnet ist, welche am jeweiligen Gewinde (9a, 9b) der Spindel (10) bzw. der Gewindestange verstellbar befestigt ist, und wobei die beiden Teile (10a, 10b) der Spindel oder Gewindestange mit einem Drehmoment übertragenden, axiale Bewegungen zulassenden Verbindungselement (11) untereinander verbunden sind.

2. Siegelvorrichtung nach Anspruch 1,
**dadurch gekennzeichnet,**
**dass** das Verbindungselement eine Profilhülse (11) ist.

3. Siegelvorrichtung nach einem der Ansprüche 1 oder 2,
**dadurch gekennzeichnet,**
**dass** zur Erzeugung der elastischen Vorspannung der Siegelwalzen (4a, 4b) gegeneinander ein pneumatisches Federelement (17) vorgesehen ist.

4. Siegelvorrichtung nach mindestens einem der Ansprüche 1 bis 3,
**dadurch gekennzeichnet,**
**dass** die Verstelleinrichtung (7, 8, 9, 10, 11) mittels eines Stellmotors (14) einstellbar ist.

5. Siegelvorrichtung nach Anspruch 4,
**dadurch gekennzeichnet,**
**dass** dem Stellmotor (14) ein Stellwertspeicher (15) zugeordnet ist.

## Claims

1. Sealing device for strip packaging with a plurality of separately sealed product bags or receptacles, comprising:
- two sealing rollers (4a, 4b) for bringing together and connecting two sealing films which form the product bag, wherein a plurality of depressions (18) corresponding to the product bags of the strip packaging are produced in the surface of the sealing rollers (4a, 4b),
- at least one drive (21, 22, 23, 24, 26) for the sealing rollers (4a, 4b) and
- a respective roller bearing (2a, 2b) for each sealing roller (4a, 4b),
- wherein at least one sealing roller (4b) is resiliently biased towards the other sealing roller (4a),
- wherein at least one roller bearing (2b) is displaceably or pivotably retained in a plane perpendicular to the roller axis and is resiliently biased in the direction of the other roller bearing (2a),
- and wherein an adjusting device (7, 8, 9, 10, 11, 12, 13, 14) is provided in order to set a minimum spacing of the roller bearings (2a, 2b) with respect to one another which forms a stop for the resilient biasing,
**characterised in that** the adjusting device contains a spindle (10) or threaded rod which is divided into two separate parts (10a, 10b) with differing thread pitch orientations (9a, 9b), wherein each part (10a, 10b) is associated with a sealing roller (4a, 4b) which is adjustably fixed on the respective thread (9a, 9b) of the spindle (10) or of the threaded rod, and wherein the two parts (10a, 10b) of the spindle or threaded rod are connected to one another by a connecting element (11) which transmits torque and allows axial movements.

2. Sealing device as claimed in Claim 1, **characterised in that** the connecting element is a profiled sleeve (11).

3. Sealing device as claimed in either Claim 1 or Claim 2, **characterised in that** a pneumatic spring element (17) is provided in order to produce the resilient biasing of the sealing rollers (4a, 4b) with respect to one another.

4. Sealing device as claimed in at least one of Claims 1 to 3, **characterised in that** the adjusting device (7, 8, 9, 10, 11) can be adjusted by means of a servomotor (14).

5. Sealing device as claimed in Claim 4, **characterised in that** a setting value memory (15) is associated with the servomotor (14).

## Revendications

1. Dispositif de scellage pour des emballages sous forme de bande avec plusieurs sachets ou compartiments de produit séparément scellés, comprenant :
- deux cylindres de scellage (4a, 4b) pour réunir et assembler deux films de scellage formant les sachets de produit, sachant qu'un certain nombre de renfoncements (18) sont ménagés dans la surface de chaque cylindre de scellage (4a, 4b), en correspondance avec les sachets de produit de l'emballage sous forme de bande,
- au moins un entraînement (21, 22, 23, 24, 26) pour les cylindres de scellage (4a, 4b), et
- un palier de cylindre respectif (2a, 2b) pour chaque cylindre de scellage (4a, 4b),
- sachant qu'au moins un cylindre de scellage (4b) est élastiquement précontraint par rapport à l'autre cylindre de scellage (4a),
- sachant qu'au moins un palier de cylindre (2b) est maintenu à translation ou à pivotement essentiellement dans un plan perpendiculaire à l'axe du cylindre et est élastiquement précontraint en direction de l'autre palier de cylindre (2a),
- et sachant qu'un dispositif de réglage (7, 8, 9, 10, 11, 12, 13, 14) est prévu pour régler une distance minimale entre les paliers de cylindre (2a, 2b) formant une butée pour la précontrainte élastique,
**caractérisé en ce que** le dispositif de réglage comprend une broche (10) ou une tige filetée qui est divisée en deux parties séparées (10a, 10b) ayant un pas de filetage (9a, 9b) différemment orienté, sachant que chaque partie (10a, 10b) est associée à un cylindre de scellage (4a, 4b), qui est fixé avec possibilité de réglage sur le filetage respectif (9a, 9b) de la broche (10) ou de la tige filetée, et sachant que les deux parties (10a, 10b) de la broche ou de la tige filetée sont reliées entre elles par un élément de liaison (11) transmettant un couple de rotation et autorisant les mouvement axiaux.

2. Dispositif de scellage selon la revendication 1, **caractérisé en ce que** l'élément de liaison est un manchon profilé (11).

3. Dispositif de scellage selon la revendication 1 ou 2, **caractérisé en ce qu'**un élément à effet de ressort pneumatique (17) est prévu pour produire la précontrainte élastique des cylindres de scellage (4a, 4b) l'un par rapport à l'autre.

4. Dispositif de scellage selon l'une des revendications 1 à 3, **caractérisé en ce que** le dispositif de réglage (7, 8, 9, 10, 11) est réglable au moyen d'un servomoteur (14).

5. Dispositif de scellage selon la revendication 4, **caractérisé en ce qu'**une mémoire de valeur de réglage (15) est associée au servomoteur (14).
